# EUROPEAN PATENT APPLICATION

(11) **EP 4 844 866 A1**
(43) Date of publication of application: **25.11.2026**
(21) Application number: 25886692.0
(22) Date of filing: 12.09.2025
(51) Int. Cl.: H01M 10/0562, H01M 10/052, C01B 25/14, H01M 10/0585

(54) **METHOD FOR MANUFACTURING LITHIUM-ION CONDUCTIVE SULFIDE-BASED COMPOUND**

(30) Priority: 29.10.2024 KR 20240149712
(71) Applicant: EcoPro BM Co., Ltd, Cheongju-si, Chungcheongbuk-do 28116 (KR)
(72) Inventor: SEOL, Jae Chang, Cheongju-si, Chungcheongbuk-do 28116 (KR); KWON, Woo Sin, Cheongju-si, Chungcheongbuk-do 28116 (KR); JUNG, Hyun Su, Cheongju-si, Chungcheongbuk-do 28116 (KR); YANG, A Reum, Cheongju-si, Chungcheongbuk-do 28116 (KR); YOON, Eui Shin, Cheongju-si, Chungcheongbuk-do 28116 (KR)
(74) Representative: Prüfer & Partner mbB Patentanwälte · Rechtsanwälte
(86) International application number: PCT/KR2025/095572
(87) International publication number: WO 2026/095760

(57) **Abstract**

The present disclosure relates to a method of manufacturing a lithium-ion-conductive sulfide-based compound and a lithium secondary battery comprising the same, and more specifically, the present disclosure relates to a method of obtaining a sulfide-based compound having excellent electrochemical characteristics and atmospheric stability by improving the problem that a sulfide-based solid electrolyte compound having an argyrodite-type crystal structure is easily deteriorated during pulverization.

## Description

### BACKGROUND

### 1. Field of the Invention

The present disclosure relates to a method of manufacturing a lithium-ion-conductive sulfide-based compound and a lithium secondary battery comprising the same, and more specifically, the present disclosure relates to a method of obtaining a sulfide-based compound having excellent electrochemical characteristics and atmospheric stability by improving the problem that a sulfide-based solid electrolyte compound having an argyrodite-type crystal structure is easily deteriorated during pulverization.

### 2. Discussion of Related Art

Batteries store power by using materials capable of undergoing electrochemical reactions at a positive electrode and a negative electrode. A representative example of batteries is a lithium secondary battery that stores electrical energy by the difference in chemical potential when lithium ions are intercalated/deintercalated into/from the positive electrode and the negative electrode.

The lithium secondary battery is manufactured by using materials capable of reversible intercalation/deintercalation of lithium ions as positive and negative electrode active materials and filling an organic electrolyte or a polymer electrolyte between the positive and negative electrodes.

However, such an organic electrolyte solution or polymer electrolyte typically uses a flammable organic solvent. Therefore, when an abnormally high temperature occurs due to internal or external factors of the lithium secondary battery, a fire or explosion may occur due to the electrolyte solution.

Owing to such safety problems, solid batteries to which a solid electrolyte is applied as a substitute for liquid-type batteries are drawing attention. Solid batteries have high stability, and their practical application as next-generation batteries having a high energy density is expected.

Among the solid electrolytes used in lithium secondary batteries, a compound that has currently received significant attention is the sulfide-based solid electrolyte. Various crystal structures of sulfide-based solid electrolytes are known, and one of them is an argyrodite-type crystal structure.

However, a sulfide-based solid electrolyte having an argyrodite-type crystal structure has a problem in that it has very high reactivity with moisture and oxygen, its manufacturing process is demanding, and the deviation in ionic conductivity performance is large. In addition, due to the characteristics of a solid-state material, micronization is essential in order to widen the contact area as much as possible, but there is a problem in that deterioration such as amorphization and impurity formation occurs during such pulverization, lowering the ionic conductivity.

### SUMMARY OF THE INVENTION

According to the present disclosure, one object is to provide a method of manufacturing a lithium-ion-conductive sulfide-based compound that prevents performance degradation due to deterioration that easily occurs during pulverization of a sulfide-based compound having an argyrodite-type crystal structure, and that has improved electrochemical performance.

In addition, one object of the present disclosure is to provide a lithium secondary battery using the sulfide-based solid electrolyte compound defined herein.

The objects of the present disclosure are not limited to the above-described objects, and other objects and advantages of the present disclosure that are not described can be understood by the following description and will be more clearly understood by the embodiments of the present disclosure. In addition, it is apparent that the objects and advantages of the present disclosure can be realized by the means and combinations thereof indicated in the claims.

According to one aspect of the present disclosure, there is provided a method of manufacturing a lithium-ion-conductive sulfide-based compound, comprising: (a) preparing a sulfide-based compound comprising a crystal phase of an argyrodite-type crystal structure; and (b) subjecting the sulfide-based compound to a wet pulverization to obtain particles having an average particle size of 3 µm or less, wherein the wet pulverization is performed using a solvent having a moisture content of less than 12.0 ppm.

In an embodiment, the crystal phase of the argyrodite-type crystal structure may be represented by the following Chemical Formula 1:

[Chemical Formula 1] Li₇₋ₓPS₆₋ₓXₓ

In Chemical Formula 1, X is at least one selected from the group consisting of Cl, Br, and I, and 0≤x≤2.

Here, the wet pulverization of step (b) may be performed using at least one selected from the group consisting of a ball mill, a pebble mill, a rod mill, a roller mill, a colloid mill, an impact mill, a jet mill, a bead mill, a vibratory mill, an attrition mill, a disk mill, and a classifier mill.

Meanwhile, the solvent is a compound having a benzene ring to which at least one alkyl group is bonded.

In addition, the solvent may be one purified by a microfilter and a molecular sieve.

In particular, the solvent is purified by a microfilter and then by a molecular sieve.

Meanwhile, the microfilter may be one having a pore size of 0.1 to 1 µm.

Here, among the particles obtained in step (b), a content of particles having a particle size of 1 µm or less is 20 wt% or more.

In an embodiment, after step (b), the method may further comprise: (c) separating particles having a particle size of 1 µm or less from among the particles.

According to another aspect of the present disclosure, there is provided a lithium secondary battery comprising a lithium-ion-conductive sulfide-based compound manufactured by the above-described manufacturing method.

### BRIEF DESCRIPTION OF THE DRAWINGS

The objects, features, and advantages of the present disclosure will become more apparent from the following description of exemplary embodiments with reference to the accompanying drawings, in which:

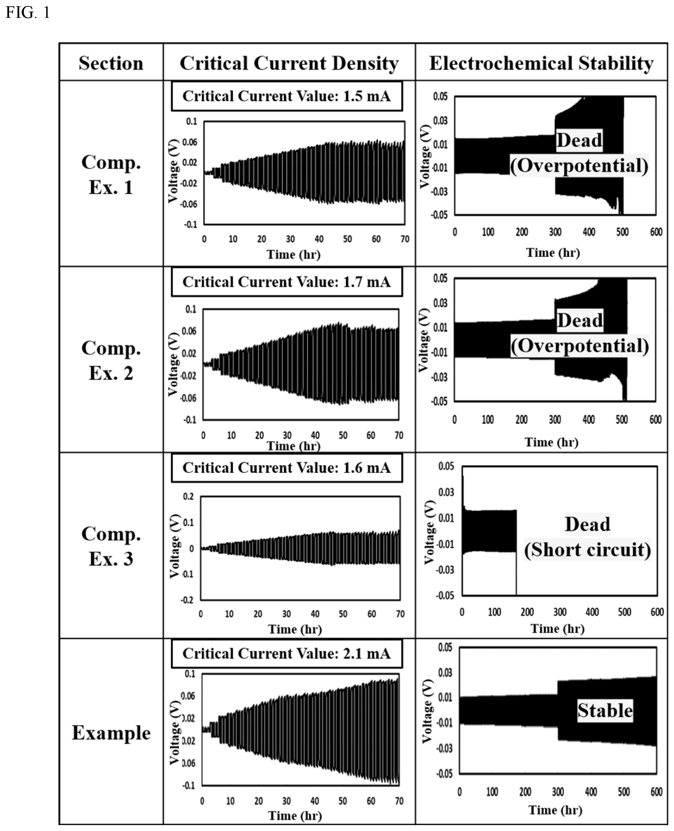

FIG. 1 shows the analysis results of the critical current density and electrochemical characteristics of a sulfide-based compound according to one example of the present disclosure.

### DETAILED DESCRIPTION OF EXEMPLARY EMBODIMENTS

For a better understanding of the present disclosure, certain terms are defined herein for convenience. Unless otherwise defined herein, scientific and technical terms used in the present disclosure will have meanings commonly understood by those skilled in the art. In addition, unless otherwise specified in the context, the singular should be understood to include the plural, and the plural should be understood to include the singular. Amounts or ratios indicated herein are molar amounts or molar ratios, unless otherwise specified in the context.

### Method of manufacturing a lithium-ion-conductive sulfide-based compound

The method of manufacturing a lithium-ion-conductive sulfide-based compound according to one aspect of the present disclosure may comprise: (a) preparing a sulfide-based compound comprising a crystal phase of an argyrodite-type crystal structure; and (b) subjecting the sulfide-based compound to a wet pulverization to obtain particles having an average particle size of 3 µm or less, wherein the wet pulverization may be performed using a solvent having a moisture content of less than 12.0 ppm.

The step (a) may be a step of synthesizing the lithium-ion-conductive sulfide-based compound, or preparing the compound before being pulverized.

The sulfide-based compound has lithium ion conductivity and may have a crystal phase of an argyrodite-type crystal structure.

The argyrodite-type crystal structure refers to the same structure as argyrodite (Ag₈GeS₆), a silver-germanium-sulfur mineral. The argyrodite-type crystal structure may have an orthorhombic (Pna2₁) phase and a cubic (F-43m) phase, among which the cubic crystal structure may have high lithium ion conductivity. Typically, the argyrodite-type crystal structure exhibits a cubic phase having excellent lithium ion conductivity at a high temperature, and exhibits an orthorhombic phase at a low temperature.

For example, Li₇PS₆, Li₆PS₅X (X is at least one of Cl, Br, and I), and the like are known as lithium-ion-conductive solid electrolyte compounds having an argyrodite-type crystal structure.

However, the argyrodite-type crystal structure has a problem in that it is sensitive to air, humidity, and the like, so that its performance is easily degraded. Therefore, a compound having an argyrodite-type crystal structure may be deteriorated even during the manufacturing process, or impurities may be easily formed.

For example, the sulfide-based compound may be obtained by mixing lithium sulfide (Li₂S) powder, phosphorus sulfide (P₂S₅) powder, and lithium halide (LiX) powder, and sintering the mixture at a temperature of 350 to 500°C under an inert atmosphere, for example, at 350°C, 355°C, 360°C, 365°C, 370°C, 375°C, 380°C, 385°C, 390°C, 395°C, 400°C, 405°C, 410°C, 415°C, 420°C, 425°C, 430°C, 435°C, 440°C, 445°C, 450°C, 455°C, 460°C, 465°C, 470°C, 475°C, 480°C, 485°C, 490°C, 495°C, 500°C, or a range between two of these values, but is not limited thereto.

Meanwhile, the sulfide-based compound may be obtained by mixing lithium sulfide (Li₂S) powder, phosphorus sulfide (P₂S₅) powder, and lithium halide (LiX) powder, and sintering the mixture at a temperature of 350 to 650°C under an atmosphere comprising hydrogen sulfide gas, for example, at 350°C, 355°C, 360°C, 365°C, 370°C, 375°C, 380°C, 385°C, 390°C, 395°C, 400°C, 405°C, 410°C, 415°C, 420°C, 425°C, 430°C, 435°C, 440°C, 445°C, 450°C, 455°C, 460°C, 465°C, 470°C, 475°C, 480°C, 485°C, 490°C, 495°C, 500°C, 505°C, 510°C, 515°C, 520°C, 525°C, 530°C, 535°C, 540°C, 545°C, 550°C, 555°C, 560°C, 565°C, 570°C, 575°C, 580°C, 585°C, 590°C, 595°C, 600°C, 605°C, 610°C, 615°C, 620°C, 625°C, 630°C, 635°C, 640°C, 645°C, 650°C, or a range between two of these values, but is not limited thereto.

Here, each component may be stoichiometrically calculated and mixed so as to have a target composition.

Here, in the crystal phase of the argyrodite-type crystal structure, the molar ratio Li/P of the lithium (Li) element to the phosphorus (P) element may be 5.00 to 7.00, for example, 5.00, 5.05, 5.10, 5.15, 5.20, 5.25, 5.30, 5.35, 5.40, 5.45, 5.50, 5.55, 5.60, 5.65, 5.70, 5.75, 5.80, 5.85, 5.90, 5.95, 6.00, 6.05, 6.10, 6.15, 6.20, 6.25, 6.30, 6.35, 6.40, 6.45, 6.50, 6.55, 6.60, 6.65, 6.70, 6.75, 6.80, 6.85, 6.90, 6.95, 7.00, or a range between two of these values, but is not limited thereto.

Adjusting the value of Li/P can improve the ionic conductivity as the arrangement and distribution ratio of lithium ions inside the compound change.

In addition, in the crystal phase of the argyrodite-type crystal structure, the molar ratio S/P of the sulfur (S) element to the phosphorus (P) element may be 4.00 to 6.00, for example, 4.00, 4.05, 4.10, 4.15, 4.20, 4.25, 4.30, 4.35, 4.40, 4.45, 4.50, 4.55, 4.60, 4.65, 4.70, 4.75, 4.80, 4.85, 4.90, 4.95, 5.00, 5.05, 5.10, 5.15, 5.20, 5.25, 5.30, 5.35, 5.40, 5.45, 5.50, 5.55, 5.60, 5.65, 5.70, 5.75, 5.80, 5.85, 5.90, 5.95, 6.00, or a range between two of these values, but is not limited thereto.

Adjusting the S/P value can secure a balance between the chemical stability and high ionic conductivity of the compound.

In the argyrodite-type crystal structure, replacing sulfur with a halogen anion stabilizes the cubic phase, so that a cubic structure can be obtained even at room temperature.

The substituted halogen element forms a vacancy at a Li site inside the argyrodite unit cell, thereby reducing the activation energy to form a new lithium ion conduction path, and as a result, the lithium ion conductivity can be improved.

Meanwhile, the crystal phase of the argyrodite-type crystal structure may comprise two or more kinds of halogen elements. As halogen elements, F, Cl, Br, I, and the like exist, but Cl, Br, I, and the like can typically be used in a compound having an argyrodite-type crystal structure.

Here, in the crystal phase of the argyrodite-type crystal structure, the molar ratio X/P of the halogen (X) element to the phosphorus (P) element may be 1.00 to 2.00, for example, 1.00, 1.02, 1.04, 1.06, 1.08, 1.10, 1.12, 1.14, 1.16, 1.18, 1.20, 1.22, 1.24, 1.26, 1.28, 1.30, 1.32, 1.34, 1.36, 1.38, 1.40, 1.42, 1.44, 1.46, 1.48, 1.50, 1.52, 1.54, 1.56, 1.58, 1.60, 1.62, 1.64, 1.66, 1.68, 1.70, 1.72, 1.74, 1.76, 1.78, 1.80, 1.82, 1.84, 1.86, 1.88, 1.90, 1.92, 1.94, 1.96, 1.98, 2.00, or a range between two of these values, but is not limited thereto.

In an embodiment, the crystal phase of the argyrodite-type crystal structure may be represented by the following Chemical Formula 1:

[Chemical Formula 1] Li₇₋ₓPS₆₋ₓXₓ

In Chemical Formula 1, X is at least one selected from the group consisting of Cl, Br, and I, and 0≤x≤2.

Step (b) may be a step of pulverizing the prepared sulfide-based compound to obtain particles having an average particle size (D₅₀) of 3 µm or less.

A compound having an argyrodite-type crystal structure has difficulty satisfying a desired particle size range during pulverization due to its characteristic ductility, and is prone to leaving coarse particles or having a non-uniform particle size distribution.

In addition, since the sulfide-based compound having an argyrodite-type crystal structure may be easily deteriorated by air, moisture, and the like, so that its performance is degraded, a special pulverization process may be required.

Therefore, in step (b), the sulfide-based compound may be pulverized using a wet pulverization method.

Here, the average particle size of the pulverized particles may be 3 µm or less, for example, 3 µm, 2.75 µm, 2.5 µm, 2.25 µm, 2 µm, 1.75 µm, 1.5 µm, 1.45 µm, 1.4 µm, 1.35 µm, 1.3 µm, 1.25 µm, 1.2 µm, 1.15 µm, 1.1 µm, 1.05 µm, 1 µm, 0.95 µm, 0.9 µm, 0.85 µm, 0.8 µm, 0.75 µm, 0.7 µm, 0.65 µm, 0.6 µm, 0.55 µm, 0.5 µm, 0.48 µm, 0.46 µm, 0.44 µm, 0.42 µm, 0.4 µm, 0.38 µm, 0.36 µm, 0.34 µm, 0.32 µm, 0.3 µm, 0.28 µm, 0.26 µm, 0.24 µm, 0.22 µm, 0.2 µm, 0.18 µm, 0.16 µm, 0.14 µm, 0.12 µm, 0.1 µm, 0.08 µm, 0.06 µm, 0.04 µm, 0.02 µm, or a range between two of these values.

Here, the pulverization may be performed by repeating the process at least once. For example, it may be performed 1, 2, 3, 4, 5, 6, 7, 8, 9, 10, 11, 12, 13, 14, 15, 16, 17, 18, 19, 20, 21, 22, 23, 24, 25 times or more, but if an excessively large number of processes is performed, the sulfide-based compound may be easily deteriorated.

Here, the wet pulverization of step (b) may be performed using, but is not limited to, at least one selected from the group consisting of a ball mill, a pebble mill, a rod mill, a roller mill, a colloid mill, an impact mill, a jet mill, a bead mill, a vibratory mill, an attrition mill, a disk mill, and a classifier mill.

In an embodiment, the pulverization may be performed under a condition of 15°C or less, for example, 15°C, 14.5°C, 14°C, 13.5°C, 13°C, 12.5°C, 12°C, 11.5°C, 11°C, 10.5°C, 10°C, 9.5°C, 9°C, 8.5°C, 8°C, 7.5°C, 7°C, 6.5°C, 6°C, 5.5°C, 5°C, 4.5°C, 4°C, 3.5°C, 3°C, 2.5°C, 2°C, 1.5°C, 1°C, 0.5°C, 0°C, or a range between two of these values.

By performing the pulverization at a low temperature, the ductility of the sulfide-based compound is minimized, and as a result, the particle size distribution can be controlled more precisely.

In particular, since the particle size distribution may become non-uniform due to the heat generated during the pulverization process, the particle size distribution of the finely pulverized particles may vary depending on the temperature control method.

In another example, the pulverization may be performed in a system comprising a chiller, a bead mill, and a slurry tank.

A bead mill is equipment that can adjust the particle size through collision with small-sized beads by introducing the material together with beads into a pulverizing vessel and then pulverizing. The material to be pulverized can be mixed in a solvent and then introduced into a pulverizing vessel provided with a stirring blade for use.

In particular, in the pulverization, cooling water is circulated in the order of the chiller, the bead mill, the slurry tank, and the chiller, and the temperature of the cooling water may be maintained at 5°C or less, for example, 5°C, 4.9°C, 4.8°C, 4.7°C, 4.6°C, 4.5°C, 4.4°C, 4.3°C, 4.2°C, 4.1°C, 4°C, 3.9°C, 3.8°C, 3.7°C, 3.6°C, 3.5°C, 3.4°C, 3.3°C, 3.2°C, 3.1°C, 3°C, 2.9°C, 2.8°C, 2.7°C, 2.6°C, 2.5°C, 2.4°C, 2.3°C, 2.2°C, 2.1°C, 2°C, 1.9°C, 1.8°C, 1.7°C, 1.6°C, 1.5°C, 1.4°C, 1.3°C, 1.2°C, 1.1°C, 1°C, 0.9°C, 0.8°C, 0.7°C, 0.6°C, 0.5°C, 0.4°C, 0.3°C, 0.2°C, 0.1°C, 0°C, or a range between two of these values.

When the cooling water is circulated as described above, more efficient cooling is possible, and the temperature of the slurry itself becomes lower, so that the ductility of the sulfide-based compound is suppressed, whereby finely pulverized particles having a narrow particle size distribution can be manufactured.

Beads in an amount of 30 to 90 wt% based on the slurry introduced into the bead mill, for example, 30 wt%, 31 wt%, 32 wt%, 33 wt%, 34 wt%, 35 wt%, 37.5 wt%, 40 wt%, 42.5 wt%, 45 wt%, 47.5 wt%, 50 wt%, 52.5 wt%, 55 wt%, 57.5 wt%, 60 wt%, 62.5 wt%, 65 wt%, 67.5 wt%, 70 wt%, 72.5 wt%, 75 wt%, 77.5 wt%, 80 wt%, 82.5 wt%, 85 wt%, 87.5 wt%, 89 wt%, 90 wt%, or a range between two of these values, may be introduced. If the beads are not sufficiently filled, pulverization may be difficult, and if filled excessively, coarse particles may be formed.

As the beads, ZrO₂, Al₂O₃, Y₂O₃, HfO₂, and the like can be selected according to the purpose, and ones having an average particle size of 0.05 to 1.5 mm, for example, 0.05 mm, 0.1 mm, 0.15 mm, 0.2 mm, 0.25 mm, 0.3 mm, 0.35 mm, 0.4 mm, 0.45 mm, 0.5 mm, 0.55 mm, 0.6 mm, 0.65 mm, 0.7 mm, 0.75 mm, 0.8 mm, 0.85 mm, 0.9 mm, 0.95 mm, 1 mm, 1.05 mm, 1.1 mm, 1.15 mm, 1.2 mm, 1.25 mm, 1.3 mm, 1.35 mm, 1.4 mm, 1.45 mm, 1.5 mm, or a range between two of these values, can be used, but they are not limited thereto.

In order to minimize the deterioration of the sulfide-based compound, the wet pulverization of step (b) may be performed using a solvent having a moisture content of less than 12.0 ppm.

Here, the moisture content of the solvent may satisfy less than 12.0 ppm, for example, 11.9 ppm, 11.7 ppm, 11.5 ppm, 11.3 ppm, 11.1 ppm, 10.9 ppm, 10.7 ppm, 10.5 ppm, 10.3 ppm, 10.1 ppm, 9.9 ppm, 9.7 ppm, 9.5 ppm, 9.3 ppm, 9.1 ppm, 8.9 ppm, 8.7 ppm, 8.5 ppm, 8.3 ppm, 8.1 ppm, 7.9 ppm, 7.7 ppm, 7.5 ppm, 7.3 ppm, 7.1 ppm, 6.9 ppm, 6.7 ppm, 6.5 ppm, 6.3 ppm, 6.1 ppm, 5.9 ppm, 5.7 ppm, 5.5 ppm, 5.3 ppm, 5.1 ppm, 4.9 ppm, 4.7 ppm, 4.5 ppm, 4.3 ppm, 4.1 ppm, 3.9 ppm, 3.7 ppm, 3.5 ppm, 3.3 ppm, 3.1 ppm, 2.9 ppm, 2.7 ppm, 2.5 ppm, 2.3 ppm, 2.1 ppm, 1.9 ppm, 1.7 ppm, 1.5 ppm, 1.3 ppm, 1.1 ppm, 0.9 ppm, 0.7 ppm, 0.5 ppm, 0.3 ppm, 0.1 ppm, or a range between two of these values.

For example, the wet pulverization may be one in which the sulfide-based compound prepared in step (a) is dispersed in the solvent and then pulverized.

The sulfide-based compound may be easily deteriorated, so that its electrochemical performance is degraded. In particular, as the pulverization process proceeds, the surface area of the particles increases, so that deterioration occurs more easily, and therefore it is necessary to suppress this.

The solvent may be a compound having a benzene ring to which at least one alkyl group is bonded. For example, the alkyl group comprises a methyl group, an ethyl group, a propyl group, an isopropyl group, a butyl group, an isobutyl group, and the like. There are those in which one, two, or three such alkyl groups are bonded to a benzene ring, but they are not limited thereto. That is, a non-polar solvent may be used in order to minimize the moisture content in the solvent.

However, it may be difficult to sufficiently suppress the deterioration of the sulfide-based compound simply by using a solvent having a low moisture content.

Although the exact mechanism of action has not been elucidated, the sulfide-based compound may be deteriorated due to impurities, such as various gases, that may inevitably be dissolved in the solvent.

Therefore, the solvent may be one purified by a microfilter and a molecular sieve.

When the solvent is purified by a microfilter and a molecular sieve, the moisture content is reduced and, at the same time, components that may deteriorate the sulfide-based compound in the solvent can be removed.

In particular, the solvent may be one purified by a microfilter and then by a molecular sieve.

When the solvent is purified by a microfilter and then purified by a molecular sieve, impurities can be removed without degrading the performance of the molecular sieve.

Since the performance of the molecular sieve may vary depending on the content and composition of moisture and/or impurities in the solvent, the solvent may be first purified by a microfilter and then the molecular sieve may be applied.

The microfilter can be used without limitation as to material and the like as long as it can remove moisture present in the solvent and does not remain in the solvent. For example, a polymer material, a ceramic material, a metal material, and the like can be used.

Meanwhile, the microfilter may be one having a pore size of 0.1 to 1 µm, for example, 0.1 µm, 0.15 µm, 0.2 µm, 0.25 µm, 0.3 µm, 0.35 µm, 0.4 µm, 0.45 µm, 0.5 µm, 0.55 µm, 0.6 µm, 0.65 µm, 0.7 µm, 0.75 µm, 0.8 µm, 0.85 µm, 0.9 µm, 0.95 µm, 1 µm, or a range between two of these values.

The molecular sieve is a material comprising uniform and extremely small pores, and can be used to remove various impurities such as gases, liquids, and dissolved substances. Here, the molecular sieve can adsorb the largest molecule among the molecules that can pass through the pores.

Meanwhile, the molecular sieve may be one having a pore size of 1 to 10 Å, for example, 1 Å, 1.5 Å, 2 Å, 2.5 Å, 3 Å, 3.5 Å, 4 Å, 4.5 Å, 5 Å, 5.5 Å, 6 Å, 6.5 Å, 7 Å, 7.5 Å, 8 Å, 8.5 Å, 9 Å, 9.5 Å, 10 Å, or a range between two of these values.

Since the performance of the molecular sieve may vary depending on the content and composition of moisture and/or impurities in the solvent, the solvent may be first purified by a microfilter and then the molecular sieve may be applied.

Meanwhile, the pulverization of step (b) may be performed while introducing an inert gas. As the inert gas, for example, N₂, Ar, and the like can be used.

The pulverized sulfide-based compound particles may have an ionic conductivity at 25°C of more than 2.90 mS/cm, for example, 2.90 mS/cm, 2.92 mS/cm, 2.94 mS/cm, 2.96 mS/cm, 2.98 mS/cm, 3.00 mS/cm, 3.02 mS/cm, 3.04 mS/cm, 3.06 mS/cm, 3.08 mS/cm, 3.10 mS/cm, 3.12 mS/cm, 3.14 mS/cm, 3.16 mS/cm, 3.18 mS/cm, 3.20 mS/cm, 3.22 mS/cm, 3.24 mS/cm, 3.26 mS/cm, 3.28 mS/cm, 3.30 mS/cm, 3.32 mS/cm, 3.34 mS/cm, 3.36 mS/cm, 3.38 mS/cm, 3.40 mS/cm, 3.42 mS/cm, 3.44 mS/cm, 3.46 mS/cm, 3.48 mS/cm, 3.50 mS/cm, 3.52 mS/cm, 3.54 mS/cm, 3.56 mS/cm, 3.58 mS/cm, 3.60 mS/cm, 3.62 mS/cm, 3.64 mS/cm, 3.66 mS/cm, 3.68 mS/cm, 3.70 mS/cm, 3.72 mS/cm, 3.74 mS/cm, 3.76 mS/cm, 3.78 mS/cm, 3.80 mS/cm, 3.82 mS/cm, 3.84 mS/cm, 3.86 mS/cm, 3.88 mS/cm, 3.90 mS/cm, 3.92 mS/cm, 3.94 mS/cm, 3.96 mS/cm, 3.98 mS/cm, 4.00 mS/cm, 4.05 mS/cm, 4.10 mS/cm, 4.15 mS/cm, 4.20 mS/cm, 4.25 mS/cm, 4.30 mS/cm, 4.35 mS/cm, 4.40 mS/cm, 4.45 mS/cm, 4.50 mS/cm, 4.55 mS/cm, 4.60 mS/cm, 4.65 mS/cm, 4.70 mS/cm, 4.75 mS/cm, 4.80 mS/cm, 4.85 mS/cm, 4.90 mS/cm, 4.95 mS/cm, 5.00 mS/cm, or a range between two of these values.

The sulfide-based compound particles can have a relatively high ionic conductivity because deterioration is suppressed during the pulverization process.

Meanwhile, the pulverized sulfide-based compound particles may have a critical current density of more than 1.7 mA/cm², for example, 1.71 mA/cm², 1.75 mA/cm², 1.8 mA/cm², 1.85 mA/cm², 1.9 mA/cm², 1.95 mA/cm², 2 mA/cm², 2.05 mA/cm², 2.1 mA/cm², 2.15 mA/cm², 2.2 mA/cm², 2.25 mA/cm², 2.3 mA/cm², 2.35 mA/cm², 2.4 mA/cm², 2.45 mA/cm², 2.5 mA/cm², or a range between two of these values.

The sulfide-based compound particles pulverized according to the above-described process may have excellent atmospheric stability.

### [Critical current density]

Here, the critical current density is determined as follows: using a symmetric cell in which Li metal is positioned at both ends of a solid electrolyte layer prepared by pressing 200 mg of the sulfide-based solid electrolyte compound at 4 ton for 2 minutes, the current value at which a cell short occurs when charging and discharging while increasing the current value per unit area at 25°C is taken as the critical current density.

The sulfide-based compound particles can also be used for manufacturing a solid electrolyte membrane that replaces a separator, but can also be used for manufacturing a positive electrode that is composited by mixing with a positive electrode active material.

Using a solid electrolyte having a small particle size widens the contact area with the positive electrode active material, so that the electrochemical characteristics can be more excellent.

Therefore, as the solid electrolyte for a positive electrode composite, one having a particle size of 1 µm or less can be used.

Here, among the particles obtained in step (b), a content of particles having a particle size of 1 µm or less is 20 wt% or more, for example, 20 wt%, 20.5 wt%, 21 wt%, 21.5 wt%, 22 wt%, 22.5 wt%, 23 wt%, 23.5 wt%, 24 wt%, 24.5 wt%, 25 wt%, 25.5 wt%, 26 wt%, 26.5 wt%, 27 wt%, 27.5 wt%, 28 wt%, 28.5 wt%, 29 wt%, 29.5 wt%, 30 wt%, 30.5 wt%, 31 wt%, 31.5 wt%, 32 wt%, 32.5 wt%, 33 wt%, 33.5 wt%, 34 wt%, 34.5 wt%, 35 wt%, 35.5 wt%, 36 wt%, 36.5 wt%, 37 wt%, 37.5 wt%, 38 wt%, 38.5 wt%, 39 wt%, 39.5 wt%, 40 wt%, 40.5 wt%, 41 wt%, 41.5 wt%, 42 wt%, 42.5 wt%, 43 wt%, 43.5 wt%, 44 wt%, 44.5 wt%, 45 wt%, 45.5 wt%, 46 wt%, 46.5 wt%, 47 wt%, 47.5 wt%, 48 wt%, 48.5 wt%, 49 wt%, 49.5 wt%, 50 wt%, or a range between two of these values.

The higher the proportion of particles having a small particle size, the easier it is to apply them as a solid electrolyte for a positive electrode composite, but the possibility that the sulfide-based compound is deteriorated may also increase.

In an embodiment, after step (b), the method may further comprise, but is not limited to: (c) separating particles having a particle size of 1 µm or less from among the particles.

The particles having a particle size of 1 µm or less obtained through step (c) can be used as a solid electrolyte for a positive electrode composite, and the remaining particles can be used for a solid electrolyte membrane.

### Lithium secondary battery

According to another aspect of the present disclosure, there is provided a lithium secondary battery comprising a lithium-ion-conductive sulfide-based compound manufactured by the above-described manufacturing method.

The lithium-ion-conductive sulfide-based compound may be used to form a positive electrode by mixing with a positive electrode active material, or may be used as a solid electrolyte membrane that replaces a separator.

The lithium secondary battery may comprise a positive electrode, a negative electrode located opposite to the positive electrode, and a separator and an electrolyte interposed between the positive electrode and the negative electrode.

Meanwhile, the lithium secondary battery may have the separator replaced with a solid electrolyte. The solid electrolyte may be disposed as a separate layer (solid electrolyte layer) between the positive electrode and the negative electrode. In such a case, an electrode slurry composition to which a solid electrolyte is further added can be used when manufacturing the negative electrode.

That is, the lithium secondary battery may include a positive electrode, a negative electrode located opposite to the positive electrode, and a solid electrolyte membrane interposed between the positive electrode and the negative electrode.

In addition, the lithium secondary battery may also be provided as an anode-free type secondary battery. Here, since the positive electrode is the same as described above, a detailed description thereof is omitted for convenience, and hereinafter, only the remaining components not described above will be described in detail. In addition, the description related to the negative electrode described later should be understood to be described on the premise that a negative electrode is present in the lithium secondary battery.

In an example, the positive electrode may comprise a positive electrode current collector and a positive electrode active material layer formed on the positive electrode current collector. Here, the positive electrode active material layer may comprise a positive electrode active material and the lithium-ion-conductive sulfide-based compound according to the above-described various embodiments.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may conventionally have a thickness of 3 to 500 µm, and fine irregularities may be formed on the surface of the current collector, thereby increasing the adhesive strength of a positive electrode active material. For example, the positive electrode current collector may be used in various forms such as a film, a sheet, a foil, a net, a porous body, foam, a non-woven fabric, etc.

As the positive electrode active material, a compound capable of reversible intercalation/deintercalation of lithium can be used. For example, there are cobalt oxide-based (LCO), nickel oxide-based (LNO), manganese oxide-based (LMO), nickel-cobalt-manganese oxide-based (NCM), nickel-cobalt-aluminum oxide-based (NCA), iron phosphate-based (LFP), and those doped and/or coated thereon, and the like, but are not limited thereto.

The positive electrode active material layer can be manufactured by applying, to the positive electrode current collector, a positive electrode slurry composition comprising the sulfide-based compound, the positive electrode active material, and, optionally as needed, a conductive material, a binder, and the like.

In this case, the sulfide-based compound may be comprised in an amount of 0.1 wt% to 15 wt% based on the total weight of the positive electrode active material layer.

Meanwhile, the positive electrode active material may be included at 80 wt% to 99 wt%, more specifically 85 wt% to 98.5 wt%, with respect to the total weight of a positive electrode slurry for forming the positive electrode active material layer. When the positive electrode active material is included in the above content range, excellent capacity characteristics may be exhibited, but the present disclosure is not limited thereto.

The conductive material is used to impart conductivity to an electrode, and is not particularly limited as long as it has electron conductivity without causing a chemical change in a battery. A specific example of the conductive material may be graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be generally contained at 0.1 to 15 wt% with respect to the total weight of a positive electrode slurry for forming the positive electrode active material layer.

The binder serves to improve the adhesion between particles of the positive electrode active material and the adhesion between the positive electrode active material and the current collector. A specific example of the binder may be polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated EPDM, styrene butadiene rubber (SBR), fluorine rubber, or various copolymers thereof, and one or a mixture of two or more thereof may be used. The binder may be included at 0.1 to 15 wt% with respect to the total weight of a positive electrode slurry for forming the positive electrode active material layer.

The positive electrode can be manufactured according to a conventional positive electrode manufacturing method. Specifically, it can be manufactured by applying a positive electrode slurry composition, which is prepared by dissolving or dispersing a sulfide-based compound, a positive electrode active material, a binder, and a conductive material in a solvent, onto a positive electrode current collector, followed by drying and rolling.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material and the binder and then imparting a viscosity for exhibiting excellent thickness uniformity when the slurry is applied to manufacture a positive electrode.

In addition, in another exemplary embodiment, the positive electrode may be manufactured by casting the positive electrode slurry composition on a separate support, and laminating a film obtained by delamination from the support on the positive electrode current collector.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined carbon, or copper or stainless steel whose surface is treated with carbon, nickel, titanium or silver, or an aluminum-cadmium alloy. In addition, the negative electrode current collector may generally have a thickness of 3 to 500 µm, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, foam, a non-woven fabric, etc.

The negative electrode active material layer may be formed by coating the negative electrode current collector with a negative electrode slurry composition including the negative electrode active material, a conductive material, and optionally as needed, a binder.

As the negative electrode active material, a compound enabling the reversible intercalation and deintercalation of lithium may be used. A specific example of the negative electrode active material may be a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, an Si alloy, an Sn alloy or an Al alloy; a metal oxide capable of doping and dedoping lithium such as SiO_{β} (0<β<2), SnO₂, vanadium oxide, or lithium vanadium oxide; or a composite including the metallic compound and the carbonaceous material such as an Si-C composite or an Sn-C composite, and any one or a mixture of two or more thereof may be used. In addition, as the negative electrode active material, a metallic lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, sheet-type, flake-type, spherical or fiber-type natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included at 80 to 99 wt% with respect to the total weight of a negative electrode slurry for forming the negative electrode active material layer.

The binder is a component aiding bonding between a conductive material, an active material and a current collector, and may be generally added at 0.1 to 10 wt% with respect to the total weight of a negative electrode slurry for forming the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene monomer (EPDM), sulfonated EPDM, styrene butadiene rubber, nitrile-butadiene rubber, fluorine rubber, and various copolymers thereof.

The conductive material is a component for further improving the conductivity of the negative electrode active material, and may be added at 10 wt% or less, and preferably, 5 wt% or less with respect to the total weight of a negative electrode slurry for forming the negative electrode active material layer. The conductive material is not particularly limited as long as it does not cause a chemical change in the battery, and has conductivity, and may be, for example, graphite such as natural graphite or artificial graphite; carbon black such as acetylene black, Ketjen black, channel black, furnace black, lamp black or thermal black; a conductive fiber such as a carbon fiber or a metal fiber; a conductive powder such as fluorinated carbon, aluminum, or nickel powder; a conductive whisker such as zinc oxide or potassium titanate; a conductive metal oxide such as titanium oxide; or a conductive material such as a polyphenylene or a derivative thereof.

In an exemplary embodiment, the negative electrode active material layer may be prepared by coating the negative electrode current collector with a negative electrode slurry composition prepared by dissolving or dispersing a negative electrode active material, and optionally, a binder and a conductive material in a solvent, and drying the coated composition, or may be prepared by casting the negative electrode slurry composition on a separate support and then laminating a film delaminated from the support on the negative electrode current collector.

Meanwhile, in the lithium secondary battery, the separator is not particularly limited as long as it is generally used in a lithium secondary battery to separate a negative electrode from a positive electrode and provide a diffusion path for lithium ions, and particularly, the separator has low resistance to ion mobility of a liquid electrolyte and an excellent electrolyte solution impregnability. Specifically, a porous polymer film, for example, a porous polymer film prepared of a polyolefin-based polymer such as an ethylene homopolymer, a propylene homopolymer, an ethylene/butene copolymer, an ethylene/hexene copolymer and an ethylene/methacrylate copolymer, or a stacked structure including two or more layers thereof may be used. In addition, a conventional porous non-woven fabric, for example, a non-woven fabric formed of a high melting point glass fiber or a polyethylene terephthalate fiber may be used. In addition, a coated separator including a ceramic component or a polymer material may be used to ensure thermal resistance or mechanical strength, and may be optionally used in a single- or multi-layered structure.

In addition, the electrolyte used in the present disclosure may be an organic electrolyte, an inorganic electrolyte, a solid polymer electrolyte, a gel-type polymer electrolyte, a solid inorganic electrolyte, or a molten-type inorganic electrolyte, which is able to be used in the production of a lithium secondary battery, but the present disclosure is not limited thereto.

Specifically, the electrolyte may include an organic solvent and a lithium salt.

The organic solvent is not particularly limited as long as it can serve as a medium enabling the movement of ions involved in an electrochemical reaction of a battery. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C2 to C20 hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferably used, and a mixture of a cyclic carbonate (for example, ethylene carbonate or propylene carbonate) having high ion conductivity and high permittivity to increase the charging/discharging performance of a battery and a low-viscosity linear carbonate-based compound (for example, ethyl methyl carbonate, dimethyl carbonate or diethyl carbonate) is more preferably used. In this case, by using a mixture of a cyclic carbonate and a chain-type carbonate in a volume ratio of approximately 1:1 to 1:9, the electrolyte solution may exhibit excellent performance.

The lithium salt is not particularly limited as long as it is a compound capable of providing a lithium ion used in a lithium secondary battery. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. The concentration of the lithium salt is preferably in the range of 0.1 to 2.0M. When the concentration of the lithium salt is included in the above-mentioned range, since the electrolyte has suitable conductivity and viscosity, the electrolyte solution can exhibit excellent electrolytic performance and lithium ions can effectively migrate.

In the electrolyte, in addition to the above electrolyte constituent components, at least one additive such as a haloalkylene carbonate-based compound such as difluoroethylene carbonate, pyridine, triethyl phosphite, triethanolamine, a cyclic ether, ethylenediamine, n-glyme, hexaphosphoric acid triamide, a nitrobenzene derivative, sulfur, a quinone imine dye, N-substituted oxazolidinone, N,N-substituted imidazolidine, an ethylene glycol dialkyl ether, an ammonium salt, pyrrole, 2-methoxyethanol, or aluminum trichloride may be further comprised for the purpose of improving the lifespan characteristics of the battery, suppressing a decrease in battery capacity, improving the discharge capacity of the battery, and the like. Here, the additive(s) may be included at 0.1 to 5 wt% with respect to the total weight of the electrolyte.

In another example, the lithium secondary battery may be a kind of all-solid-state battery that does not comprise an electrolyte solution and comprises a solid electrolyte layer composed of a solid electrolyte membrane.

Here, the solid electrolyte membrane may refer to a sulfide-based solid electrolyte compound, which is a kind of solid-phase material capable of ion conduction, is formed in a membrane-type structure.

The solid electrolyte membrane can be manufactured according to a conventional method known in the art, and for example, the solid electrolyte membrane can be manufactured by press-molding a powder of a sulfide-based solid electrolyte compound and then processing it into a required shape.

However, since it is difficult to maintain a membrane-type structure with only a sulfide-based compound, the solid electrolyte membrane can be manufactured by mixing a binder.

Here, as the binder, one having excellent binding strength to the sulfide-based compound, having no decrease in ionic conductivity, and having excellent flexibility is preferable. In addition, it should be easily peelable from a release film typically used in the manufacture of a solid electrolyte membrane.

For example, polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluororubber, or various copolymers thereof can be used, and one of them alone or a mixture of two or more thereof can be used.

Such a solid electrolyte membrane can be manufactured by applying a slurry comprising a sulfide-based compound, a binder, and a solvent onto a release film, and then removing the solvent.

In addition, the solid electrolyte membrane may further comprise a conductive material, an auxiliary binder, and the like as needed.

The conductive material is used to impart conductivity so that electron movement accompanying the movement of ions is possible, and its type is not limited as long as it has electronic conductivity without an unnecessary chemical reaction. Examples comprise graphite, carbon black, acetylene black, Ketjen black, furnace black, lamp black, thermal black, carbon fiber, carbon nanotube, graphene, copper, aluminum, nickel, gold, silver, and a conductive polymer.

In the solid electrolyte membrane, the content of the sulfide-based solid electrolyte compound may be 80 to 99.9 wt%, for example, 80 wt%, 80.5 wt%, 81 wt%, 81.5 wt%, 82 wt%, 82.5 wt%, 83 wt%, 83.5 wt%, 84 wt%, 84.5 wt%, 85 wt%, 85.5 wt%, 86 wt%, 86.5 wt%, 87 wt%, 87.5 wt%, 88 wt%, 88.5 wt%, 89 wt%, 89.5 wt%, 90 wt%, 90.5 wt%, 91 wt%, 91.5 wt%, 92 wt%, 92.5 wt%, 93 wt%, 93.5 wt%, 94 wt%, 94.5 wt%, 95 wt%, 95.5 wt%, 96 wt%, 96.5 wt%, 97 wt%, 97.5 wt%, 98 wt%, 98.5 wt%, 99 wt%, 99.5 wt%, 99.9 wt%, or a range between two of these values, but is not limited thereto.

Here, the thickness of the solid electrolyte membrane is not limited, and may be 5 to 300 µm, for example, 5 µm, 10 µm, 15 µm, 20 µm, 25 µm, 30 µm, 35 µm, 40 µm, 45 µm, 50 µm, 55 µm, 60 µm, 65 µm, 70 µm, 75 µm, 80 µm, 85 µm, 90 µm, 95 µm, 100 µm, 105 µm, 110 µm, 115 µm, 120 µm, 125 µm, 130 µm, 135 µm, 140 µm, 145 µm, 150 µm, 155 µm, 160 µm, 165 µm, 170 µm, 175 µm, 180 µm, 185 µm, 190 µm, 195 µm, 200 µm, 205 µm, 210 µm, 215 µm, 220 µm, 225 µm, 230 µm, 235 µm, 240 µm, 245 µm, 250 µm, 255 µm, 260 µm, 265 µm, 270 µm, 275 µm, 280 µm, 285 µm, 290 µm, 295 µm, 300 µm, or a range between two of these values.

Meanwhile, the solid electrolyte membrane may have a free-standing characteristic that allows it to be used without a separate support, but is not limited thereto.

Since the lithium secondary battery including the positive electrode according to the present disclosure stably exhibits an excellent discharge capacity, excellent output characteristics and excellent lifetime characteristics, it is useful in portable devices such as a mobile phone, a notebook computer and a digital camera and an electric vehicle field such as a hybrid electric vehicle (HEV).

The outer shape of the lithium secondary battery according to the present disclosure is not particularly limited, but may be a cylindrical, prismatic, pouch or coin type. In addition, the lithium secondary battery may be used in a battery cell that is not only used as a power source of a small device, but also preferably used as a unit battery for a medium-to-large battery module including a plurality of battery cells.

According to still another exemplary embodiment of the present disclosure, a battery module including the lithium secondary battery as a unit cell and/or a battery pack including the same is provided.

The battery module or the battery pack may be used as a power source of at least one medium-to-large device including a power tool; an electric motor vehicle such as an electric vehicle (EV), a hybrid electric vehicle, and a plug-in hybrid electric vehicle (PHEV); and a power storage system.

Hereinafter, the present disclosure will be described in further detail with reference to examples. However, these examples are merely provided to exemplify the present disclosure, and thus the scope of the present disclosure will not be construed to be limited by these examples.

### Preparation Example 1. Preparation of sulfide-based compound

### Comparative Example 1

In a glove box (N₂, H₂O < 10 ppm), a sulfide-based compound having a Li_{5.5}PS_{4.5}Cl_{1.5} composition with an average particle size (D₅₀) of 6 µm and toluene as a solvent were charged into a pulverizing vessel coupled to a horizontal bead mill to form a slurry, which was stirred. Here, the moisture content of the solvent was measured to be 19.7 ppm.

Beads of 0.5 mm ZrO₂ in an amount of 60 wt% based on the slurry were introduced into the pulverizing vessel, the stirring speed was set to 6 m/s, the pump speed was set to 2 ml/s, the stirred slurry was circulated for 40 minutes, and then transferred to a vessel.

Next, dehydration was performed through a vacuum filtration device inside the glove box (Pore size: 0.5 µm). Thereafter, the dehydrated product was dried in a vacuum oven (10 torr, 100°C) for 2 hours, cooled (50°C) under an N₂ atmosphere, and then recovered to prepare a pulverized sulfide-based compound.

### Comparative Example 2

A pulverized sulfide-based compound was prepared in the same manner as in Comparative Example 1, except that a solvent purified by passing it through a porous microfilter (Pore size: 0.5 µm) capable of removing moisture and coupled to a housing was used.

Here, the moisture content of the solvent was measured to be 12.0 ppm.

### Comparative Example 3

A pulverized sulfide-based compound was prepared in the same manner as in Comparative Example 1, except that a solvent purified by introducing a bead-type zeolite molecular sieve having an average diameter of 3 to 5 mm into the solvent was used.

### Example

A pulverized sulfide-based compound was prepared in the same manner as in Comparative Example 1, except that a solvent purified by passing it through the microfilter (Pore size: 0.5 µm) used in Comparative Example 2 and then introducing the molecular sieve used in Comparative Example 3 was used.

Here, the moisture content of the solvent was measured to be 8.0 ppm.

### Experimental Example 1. Analysis of characteristics of sulfide-based compound

Through the particle size analysis results of the fine sulfide-based compound according to Preparation Example 1, the proportion of particles having a particle size of less than 1 µm, D₅₀, and Dₘₐₓ were confirmed, and the ionic conductivity was measured, which are shown in Table 1 below.

**[Table 1]**

| Classification | Comparative Example 1 | Comparative Example 2 | Comparative Example 3 | Example |
|---|---|---|---|---|
| <1 µm (%) | 28.75 | 27.20 | 27.50 | 26.20 |
| D₅₀ (µm) | 2.15 | 2.21 | 2.12 | 2.37 |
| Dₘₐₓ (µm) | 13.08 | 13.08 | 11.00 | 13.08 |
| Ionic conductivity (mS/cm) | 2.55 | 2.90 | 2.34 | 3.32 |

According to Table 1, it can be confirmed that the quality of the pulverized product varies depending on the method of purifying the solvent during the wet pulverization of the sulfide-based solid electrolyte compound.

For example, in Comparative Example 2 in which the solvent was purified by a microfilter, the ionic conductivity increased compared to Comparative Example 1.

Meanwhile, in Comparative Example 3 in which the solvent was purified by a molecular sieve, the ionic conductivity was rather lowered compared to Comparative Example 1.

In the Example in which the solvent was purified in the order of a microfilter and a molecular sieve, the ionic conductivity was significantly improved compared to Comparative Example 1.

### Preparation Example 2. Preparation of solid electrolyte membrane and lithium secondary battery (symmetric cell)

A pressure cell was prepared by uniaxially applying a pressure of 200 MPa to 200 mg of the sulfide-based compound of the Comparative Examples and the Example. At this time, Li metal was inserted at both ends of the solid electrolyte to prepare a lithium secondary battery symmetric cell having a Li/sulfide-based compound/Li electrode structure.

### Experimental Example 2. Evaluation of electrochemical characteristics of lithium secondary battery (symmetric cell)

The electrochemical characteristics of the lithium secondary battery (symmetric cell) prepared in Preparation Example 2 were evaluated using a TOSCAT-3100 device from Toyo.

In order to measure the critical current value for atmospheric stability evaluation, the Li plating/stripping characteristics were evaluated while gradually increasing the charge/discharge current value, and the current value at which a cell short occurred, that is, the critical current value, was confirmed, and the results are shown in FIG. 1.

Here, the critical current density was found to be 1.5 mA/cm² (Comparative Example 1), 1.7 mA/cm² (Comparative Example 2), 1.6 mA/cm² (Comparative Example 3), and 2.1 mA/cm² (Example).

In addition, an evaluation of 300 cycles was performed by applying a current of 0.25 to 0.30 mA per unit area. The electrochemical stability of the solid electrolyte was evaluated by repeating stripping/plating (1 hr each) per cycle, where a current of 0.25 mA/cm² was applied up to 150 cycles, and a current of 0.30 mA/cm² was applied in subsequent cycles, and the results are shown in FIG. 1.

Referring to FIG. 1, it can be confirmed that the quality of the pulverized product varies depending on the method of purifying the solvent during the wet pulverization of the sulfide-based solid electrolyte compound.

For example, in Comparative Example 2 in which the solvent was purified by a microfilter, the critical current value increased compared to Comparative Example 1, but the electrochemical stability exhibited a similar level.

Meanwhile, in Comparative Example 3 in which the solvent was purified by a molecular sieve, the critical current value also increased, but a short occurred in the symmetric cell, so that the electrochemical stability was rather lowered.

In the Example in which the solvent was purified in the order of a microfilter and a molecular sieve, both the critical current value and the electrochemical stability were improved compared to Comparative Example 1. In particular, unlike the symmetric cells of the Comparative Examples in which overvoltage or a short occurred, the symmetric cell of the Example exhibited a stable result without overvoltage or a short even up to 600 hr.

According to the present disclosure, deterioration that may occur during pulverization of an argyrodite-type sulfide-based compound is suppressed, so that a sulfide-based compound having more excellent electrochemical characteristics can be provided.

In addition to the above-described effects, specific effects of the present disclosure are described while explaining specific details for the present disclosure.

Although embodiments of the present disclosure have been described above, those skilled in the art can make various modifications and changes to the present disclosure by adding, changing, or deleting components without departing from the spirit of the present disclosure as set forth in the claims, which will be included within the scope of rights of the present disclosure.

## Claims

1. A method of manufacturing a lithium-ion-conductive sulfide-based compound, comprising:
(a) preparing a sulfide-based compound comprising a crystal phase of an argyrodite-type crystal structure; and
(b) subjecting the sulfide-based compound to a wet pulverization to obtain particles having an average particle size of 3 µm or less,
wherein the wet pulverization is performed using a solvent having a moisture content of less than 12.0 ppm.

2. The method of claim 1, wherein the crystal phase of the argyrodite-type crystal structure is represented by the following Chemical Formula 1:
[Chemical Formula 1] Li₇₋ₓPS₆₋ₓXₓ
wherein,
X is at least one selected from the group consisting of Cl, Br, and I, and
0≤x≤2.

3. The method of claim 1, wherein the wet pulverization of step (b) is performed using at least one selected from the group consisting of a ball mill, a pebble mill, a rod mill, a roller mill, a colloid mill, an impact mill, a jet mill, a bead mill, a vibratory mill, an attrition mill, a disk mill, and a classifier mill.

4. The method of claim 1, wherein the solvent is a compound having a benzene ring to which at least one alkyl group is bonded.

5. The method of claim 1, wherein the solvent is purified by a microfilter and a molecular sieve.

6. The method of claim 5, wherein the solvent is purified by a microfilter and then by a molecular sieve.

7. The method of claim 5, wherein the microfilter has a pore size of 0.1 to 1 µm.

8. The method of claim 1, wherein, among the particles obtained in step (b), a content of particles having a particle size of 1 µm or less is 20 wt% or more.

9. The method of claim 1, further comprising, after step (b):
(c) separating particles having a particle size of 1 µm or less from among the particles.

10. A lithium secondary battery comprising a lithium-ion-conductive sulfide-based compound manufactured by the method according to any one of claims 1 to 9.
